# EUROPEAN PATENT SPECIFICATION

(11) **EP 2 041 461 B1**
(45) Date of publication and mention of the grant of the patent: **06.06.2012**
(21) Application number: 07733379.7
(22) Date of filing: 26.06.2007
(51) Int. Cl.: F16K 17/04, F16K 37/00, G01N 3/00

(54) **VALVE TEST METHOD AND APPARATUS**
VENTILPRÜFVERFAHREN UND -VORRICHTUNG
PROCEDE ET APPAREIL DE TEST DE VANNE

(30) Priority: 29.06.2006 GB 0612994
(43) Date of publication of application: 01.04.2009
(73) Proprietor: QinetiQ Limited, Farnborough Hampshire GU14 0LX (GB)
(72) Inventor: MOODY, Martin John, Fife KY11 2XR (GB)
(74) Representative: Humphreys, Elizabeth Jane
(86) International application number: PCT/GB2007/002386
(87) International publication number: WO 2008/001073

(56) References cited:
- DE-A1- 3 703 535
- DE-A1- 10 308 094
- DE-C1- 19 939 695
- FR-A1- 2 524 603
- US-A- 4 349 885

## Description

This invention relates to valve testing, and particularly, but not exclusively, to in situ testing of valves having biasing springs, of which pressure relief valves are important examples.

Pressure relief valves are designed to open automatically at a pre-determined set pressure level of system pressure and to achieve a pressure relieving flow capacity at a specified pressure and temperature above the set point (overpressure) before re-closing at a pressure below the opening point (blowdown).

Pressure relief valves perform an essential role, responding to system conditions to prevent catastrophic failure when other instruments and control systems fail adequately to control process limits. As such pressure relief valves are widely used in a range of industries, an important example of which is the oil and gas exploration and production industry and in petrochemical plants generally.

Given the role they play in ensuring the safety of process systems, pressure relief valves are subject to a number of performance standards, such as BS EN ISO 4126-6:2003: Safety devices for protection against excessive pressure.

Most pressure relief valves contain neither instrumentation nor external operators, and it is extremely desirable to establish an effective program for inspection and maintenance to ensure that they will operate when called upon in emergency situations. Again, a number of published guidelines exist for recommending the basic structure of an effective pressure relief valve inspection and maintenance program.

Regular testing of valves is one of the most important elements of an effective maintenance program. There are many techniques available for conducting pressure relief valve tests. It would be desirable, in a test, to subject the pressure relief valve to the full operating conditions that it is expected to endure. Such a test has the advantage of assuring that all of the operating characteristics of the valve, set pressure, lift and blowdown are acceptable. However, this type of test is often impractical if not impossible.

The most commonly used valve test is therefore the bench-testing alternative whereby valves are transported to a central shop, and keeping of test data can be monitored. Removal of the valve from site, transportation and re-installation however, is costly and time consuming, and can result in significant down time in a process plant.

US 4,349,885 discloses a device for measuring the set pressure of a safety valve comprising a springloaded closure element, the device including; a position transducer for generating a position signal representative of the position of the closure element, a forcer means to apply a force to the closure element in a direction opposite the springloaded bias, a force transducer for generating a force signal representative of the force applied to the closure element and a controller means for activating the forcer and monitoring the position transducer and force transducer

It is an object of the present invention to provide an improved method and apparatus for valve testing.

According to a first aspect of the invention therefore, there is provided a method for testing a valve having a spring for biasing the valve, the method comprising applying oscillation excitation to the spring; detecting a response to the excitation and determining a valve characteristic based on the detected response.

The present invention therefore affords an automated and intervention free method of assessing the correct functioning of relief valves. Valves can advantageously be tested in situ and without depressurising the associated system. A valve test according to the present invention can advantageously be performed in less than ten or even five minutes, and requires no specialist technician support.

Preferably excitation comprises longitudinal compression/expansion of the spring, and more preferably excitation is applied by a vibrator, preferably an electromechanical vibrator, connected in series with the spring.

In one embodiment, excitation is applied systematically over a range of frequencies, ie. a frequency sweep is employed, and when resonance is detected the resonant frequency of the spring assembly can be accurately measured. The frequency at which resonance occurs can provide an indication of the spring condition since this is dependent upon the dynamic stiffness of the assembly under test.

If the resonant frequency of the spring assembly is known, either by testing or from recorded information, excitation can advantageously be applied at the resonant frequency. An embodiment operating in this way exploits the fact that when a spring mass system is mechanically excited at its resonant frequency the force required to displace the assembly drops to very low levels. In this way low applied force levels can result in sufficiently large forces in the valve system to produce valve lift (the opening of the valve). The relationship between the input and response forces depends on the damping characteristics of the valve system.

In one embodiment, valve lift produced by applied excitation is detected, and the valve bias release force (ie the set point of the valve) can be determined. Applying excitation at the resonant frequency and then increasing the input excitation levels progressively allows the point at which the spring force is overcome and the valve starts to lift to be accurately determined. The amplitude required to lift the valve can provide an indication of valve stiction and indicate correct operation.

In a further embodiment valve displacement resulting from excitation can be detected, and the opening displacement of the valve can be determined.

A second aspect of the invention provides valve test apparatus for a valve having a biasing spring, the apparatus comprising an exciter for exciting the spring; at least one sensor for detecting a response of said excitation; and a controller for determining a valve characteristic based on the response detected by said at least one sensor, wherein the exciter is an electromechanical vibrator connected in series with the spring.

The exciter can advantageously be made of magnetostrictive or piezoelectric material, and in certain embodiments can replace an existing valve component, for example a load washer or spindle of a conventional valve could be replaced with an equivalent component but adapted additionally to provide excitation to the system. Such an arrangement would allow the present invention to be put into effect by simple substitution of components of an existing valve.

A further aspect of the invention provides a method of maintaining a plurality of valves having spring biasing means, the method comprising storing for each of a plurality of valves characteristic valve data; testing one of said plurality of valves by detecting a response to applied excitation, and comparing the detected response to stored valve data corresponding to the tested valve to determine a valve condition.

This method affords the advantage that a number of valves can routinely be tested in situ. The technique may also provide a preventative maintenance function through routine, controlled, actuation of the valves.

In one embodiment, the resonant frequency of each valve is stored and periodically tested. The test results can be compared to the stored data to determine whether the valve condition remains acceptable. In addition, the test cycle performed on each valve can be tailored according to the stored valve data, to improve the efficiency of testing. Knowledge of the system pressure at the time of the test can also be used to tailor the test cycle, for example to set the initial amplitude excitation appropriately.

A still further aspect of the invention provides system for maintaining a plurality of valves having biasing springs, the system comprising test apparatus connected to each valve for sensing the response to applied excitation; a data store for storing valve data for each valve; an interface for providing a test signal to a selected test apparatus, and receiving sensed response signals; and a processor for comparing the response signals to stored valve data to determine a valve status.

Any feature in one aspect of the invention may be applied to other aspects of the invention, in any appropriate combination. In particular, method aspects may be applied to apparatus aspects, and vice versa.

Preferred features of the present invention will now be described, purely by way of example, with reference to the accompanying drawings, in which:
Figure 1 illustrates a typical pressure relief valve;
Figure 2 shows a pressure relief valve according to an embodiment of the present invention;
Figure 3 is a schematic illustration of spring force in a valve being tested;
Figure 4 is a graph of spring/exciter force and system pressure;
Figure 5 is a flow chart illustrating an exemplary test sequence;
Figure 6 shows an embodiment of a control system architecture for valve testing according to the present invention.

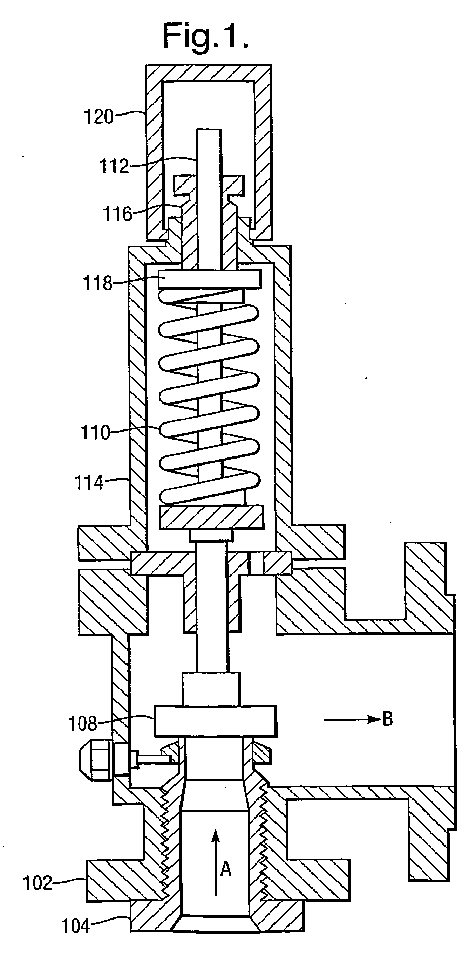

The simplest and most reliable type of pressure relief valve is the spring-loaded design illustrated in Figure 1. A valve body 102 includes an opening for a nozzle 104, which in tum has an opening providing a seating surface against which valve disk 108 presses. The valve disk is biased against the seating surface by spring 110 via the stem or spindle 112. The spring force opposes the system pressure indicated by arrow A. The spring is supported by the bonnet 114 via adjusting screw 116 and load washer 118. A removable cap 120 covers the end of the stem and the adjusting screw. When the system pressure A rises above the level of the spring force, the disk 'lifts' upwards, opening the valve and allowing pressure to be vented as indicated by arrow B. Numerous variations on this design exist, such as the addition of bellows, or trims for aggressive or incompressible fluids, however the basic principle of operation remains the same across a wide range of pressure relief valves.

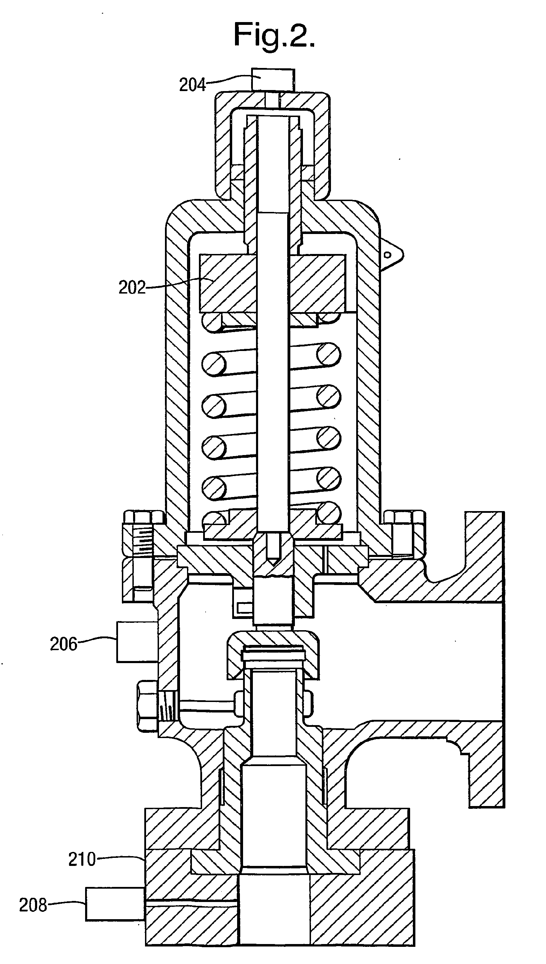

In Figure 2, a pressure relief valve includes an exciter 202 located between the spring and the adjusting screw (or between the spring and the bonnet if no adjusting screw is present). The exciter is adapted to apply a force in the axial direction of the spring in order to increase or decrease the compression force of the spring. The exciter is electrically connected to an oscillator (not shown) to provide the input for producing controlled excitation to the valve assembly.

Excitation can be achieved by means of a solid-state exciter using magnetostrictive materials such as Terfenol-D (RTM), or piezoelectric materials, such as PZT, in series with the valve spring. It is possible that the exciter can replace existing valve components, to allow modification of the valve by relatively simple substitution of components. In Figure 2, the exciter replaces the load washer of Figure 1.

Alternatively, excitation can be achieved using 'bolt-on' electromechanical vibration generators attached externally to the valve. In this way the spring is excited indirectly by applying oscillation or vibration to the entire valve.

The force applied by the exciter can be determined by the amplitude of the drive signal applied, or by a dedicated load sensor on the spring or exciter. In one embodiment the sensor and exciter can be integral eg. in the form of a load cell which incorporates a strain gauge and is used both to apply excitation and to determine the resulting forces.

A stem position sensor 204 is mounted to the cap. Appropriate proximity sensors include inductive sensors eg. Linear Variable Differential Transformer (LVDT), capacitive sensors or non-contact laser displacement sensors. The stem position sensor monitors the stem position and hence the valve disk displacement during testing.

An acoustic emission sensor 206 is mounted on the valve body and is sensitive to acoustic vibrations cased by pressure release through the valve upon valve lift. An inlet, or system pressure sensor 208, and appropriate inlet adaptor 210 is also included to monitor the system pressure. In alternative embodiments, line pressure information may already be available from the existing plant data, and so a dedicated sensor will not be necessary.

The various sensors are connected to a controller (not shown) to monitor the response of the valve to applied excitation. It should be noted that embodiments of the invention may employ different configurations of sensors to detect the response to excitation, and that not all of the sensors in the above example are required. For instance valve lift can be detected either by an acoustic sensor or by monitoring valve displacement.

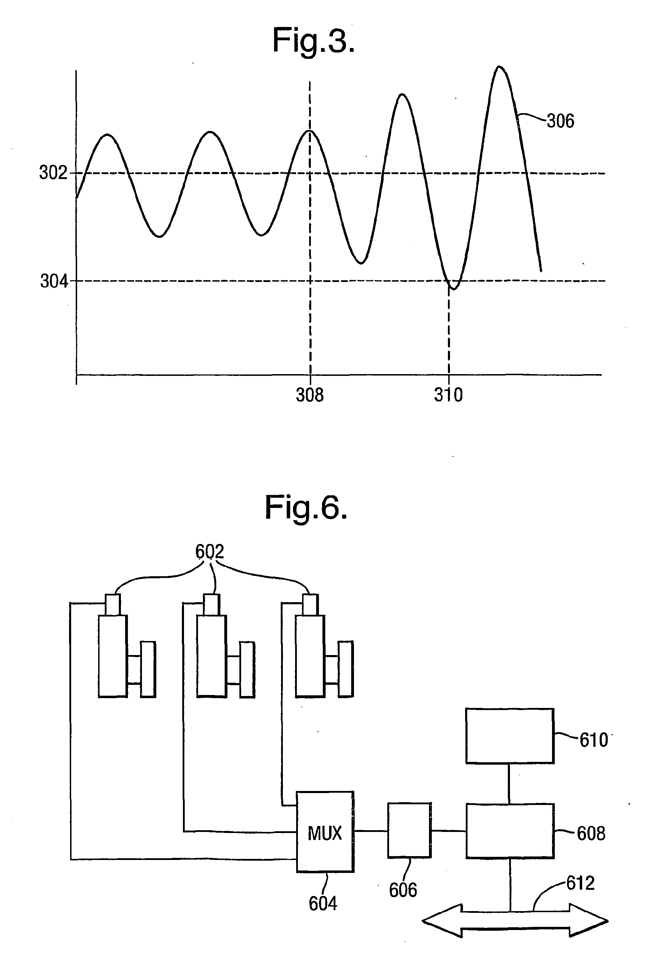

Figure 3 schematically illustrates forces acting on the valve disk according to the present invention. The static preload in the spring is shown at 302, this being the release force of the valve. The normal system pressure is shown at 304, less than the release pressure. Trace 306 shows the exciter force superimposed onto the static spring preload. The exciter force oscillates, alternately increasing and decreasing the spring preload. Up until time 308, the amplitude of the exciter force remains substantially constant, and the net force in the spring remains greater than the force exerted by the system pressure, maintaining the valve closed. At time 308, the amplitude of the exciter force is ramped up until at time 310 the net force in the spring falls below that exerted by the system pressure, which causes the valve to open.

Since the exciter force is oscillatory in nature, it can be seen that the net force in the spring increases momentarily after time 310, to a value above the system pressure, however closure of the valve in alternate half cycles can be tolerated, and the design of the seating surface and the disk in many valves is such that the valve remains open during the full cycle.

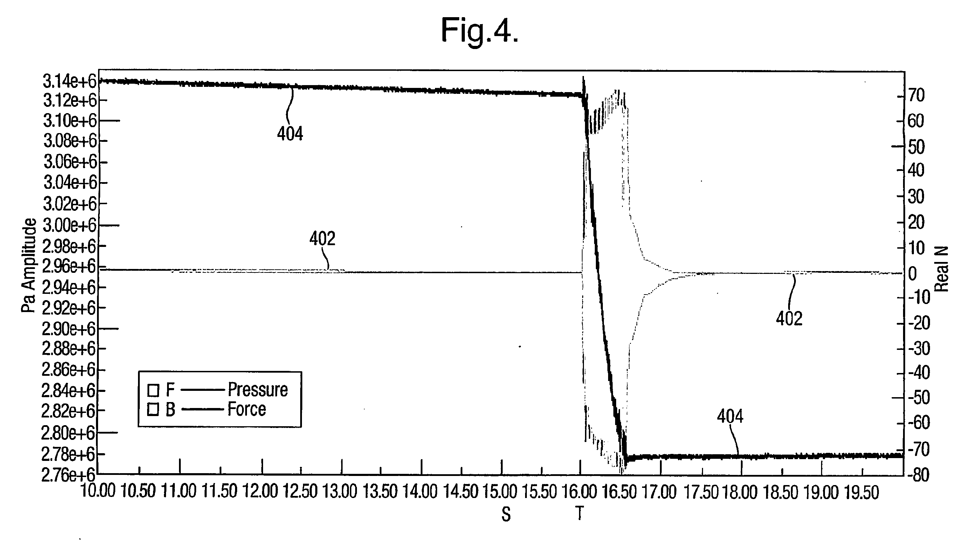

Figure 4 is an experimental plot of an embodiment of the invention. The force plot 402 of the force of the exciter is substantially zero up until time T. At time T, a sine wave is applied to the exciter at the resonant frequency of the spring assembly, resulting in the force oscillating between approximate upper and lower values. These values are sufficient to cause the net force in the spring to be less than the system pressure, resulting in venting as illustrated by the plot 404 of system pressure.

The spring assembly can be excited in a number of different modes, however it has been found that the second longitudinal mode is advantageous in producing valve lift. Furthermore the second longitudinal mode of vibration is readily achievable by excitation from one end of the spring using high force, low displacement excitation, as offered by a solid state exciter for instance.

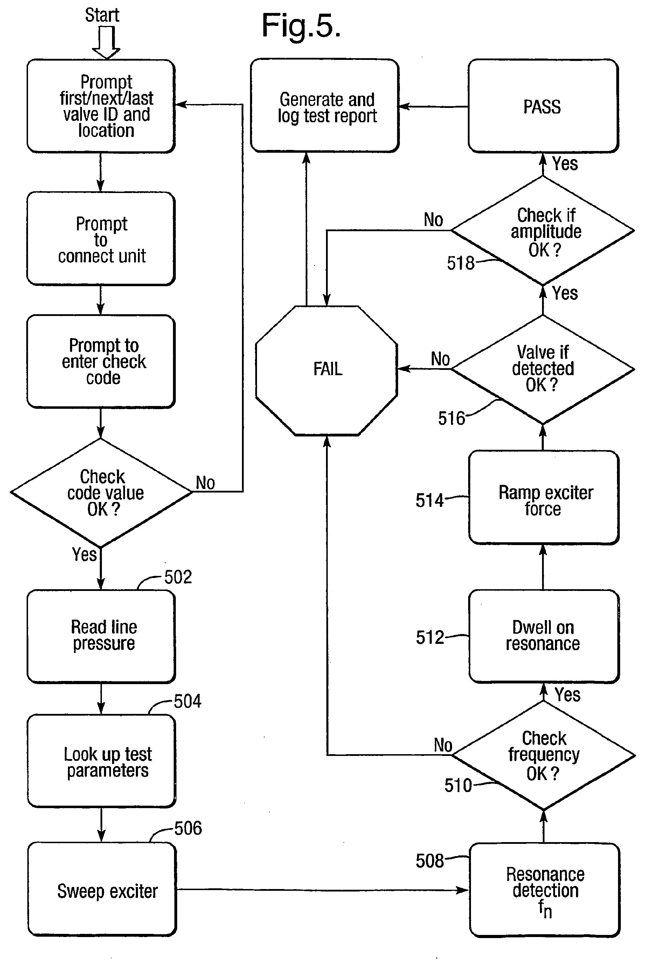

In the exemplary test sequence of Figure 5, after a verification process for connecting to a chosen valve, the system pressure is read at step 502, and the test parameters for that valve are looked up at step 504.

At step 506, a frequency sweep is applied to the exciter, and the resonant frequency of the spring assembly detected at step 508. A first test condition is checked at step 510 by comparing the measured resonant frequency to a reference value. If the measure value is within a defined tolerance of the reference value then the test sequence continues, with the exciter frequency dwelling on the resonant frequency at 512. As shown at 514, the amplitude of excitation is steadily increased until valve lift is detected at 516. At this step the exciter force at which valve lift is detected, together with a measure of the system pressure are used to provide a value for the valve set pressure. This value is used as a second test condition in comparison to a reference value.

A third test condition is applied at step 518 by measuring the valve lift amplitude, and again comparing with a reference value.

If a valve fails at any of the test conditions, a failure routine is entered and fail is logged and reported. Otherwise the valve is passed, and a pass is logged and reported.

Referring now to Figure 6, a valve test system is shown with a plurality of valves 602 linked to a multiplexer 604. Signals are passed to and received from signal processing unit 606, which performs functions such as amplification of drive signals and filtering and conditioning of sensed signals Processor 608, which has access to memory 610, feeds data to and receives data from the signal processing unit. The processor is interfaced to a plant wide communication bus 612, which may be an existing plant system, or a dedicated valve test system, and which can connect multiple similar units across a plant or platform. Connection of the components in the valve test system may be by wires or may be wireless.

The system can be fully automated with valve tests performed to a pre-determined schedule; test results and fault condition warnings can be communicated back to a central location. Data could either be fed to the plant condition based monitoring for further analysis and interpretation or processed as part of a stand-alone system. The system can additionally provide real time indication of valve state and whether a valve has operated under plant fault conditions.

It will be understood that the present invention has been described above purely by way of example, and modification of detail can be made within the scope of the invention.

The invention extends to methods and/or apparatus substantially as herein described with reference to the accompanying drawings. Each feature disclosed in the description, and (where appropriate) the claims and drawings may be provided independently or in any appropriate combination, limited only by the appended claims.

## Claims

1. A method for testing a valve having a spring for biasing the valve, the method comprising:
applying oscillation excitation to the spring;
detecting a response to the excitation; and
determining a valve characteristic based on the detected response.

2. A method according to Claim 1, wherein the excitation comprises longitudinal compression/expansion of the spring.

3. A method according to Claim 1 or Claim 2, wherein excitation is applied by a vibrator connected in series with the spring.

4. A method according to any preceding claim, wherein the detected response comprises resonant oscillation,

5. A method according to a preceding claim, wherein the valve characteristic is the resonant frequency of the spring assembly.

6. A method according to any one of Claims 1 to 3, wherein the excitation is applied at the resonant frequency of the spring assembly.

7. A method according to any preceding claim wherein testing of the valve is performed in situ.

8. Valve test apparatus for a valve having a biasing spring (110), the apparatus comprising:
an exciter (202) for exciting the spring;
at least one sensor (204, 206, 208) for detecting a response of said excitation; and
a controller for determining a valve characteristic based on the response detected by said at least one sensor (204, 206, 208), **characterised in that** the exciter (202) is an electromechanical vibrator connected in series with the spring (110).

9. Apparatus according to Claim 8, wherein the exciter comprises a piezoelectric or magnetostrictive vibrator.

10. Apparatus according to Claim 8 or Claim 9, wherein the vibrator replaces an existing valve component.

11. A valve having a biasing spring and including valve test apparatus according to any one of Claims 8 to 10.

12. A method or apparatus according to any preceding claim, wherein the valve is a pressure relief valve.

## Patentansprüche

1. Verfahren zum Prüfen eines Ventils, das eine Feder zum Vorspannen des Ventils aufweist, wobei das Verfahren umfasst:
Bewirken einer Schwingungsanregung an die Feder;
Erfassen einer Realtion auf die Anregung; und
Bestimmen einer Ventilkennlinie auf der Basis der erfassten Antwort.

2. Verfahren nach Anspruch 1, worin die Anregung eine longitudinale Kompression/Expansion der Feder umfasst.

3. Verfahren nach Anspruch 1 oder 2, worin die Anregung mit Hilfe eines in Reihe mit der Feder verbundenen Vibrators erfolg.

4. Verfahren nach einem der vorhergehenden Ansprüche, worin die erfasste Reaktion eine Resonanzschwingung umfasst.

5. Verfahren nach einem der vorhergehenden Ansprüche, worin die Ventilkennlinie die Resonanzfrequenz der Federanordnung ist.

6. Verfahren nach einem der Ansprüche 1 bis 3, worin die Anregung bei der Resonanzfrequenz der Federanordnung erfolgt.

7. Verfahren nach einem der vorhergehenden Ansprüche, worin die Ventilprüfung in situ erfolgt.

8. Ventilprüfvorrichtung für ein Ventil, das eine Feder zum Vorspannen aufweist, wobei die Vorrichtung umfasst:
eine Erregereinrichtung (202) zum Anregen der Feder;
zumindest einen Sensor (204, 206, 208) zum Erfassen einer Reaktion auf die Anregung; und
einen Steuerung zum Bestimmen einer Ventilkennlinie auf der Basis der durch den zumindest einen Sensor (204, 206, 208) erfassten Reaktion, **dadurch gekennzeichnet, dass** die Erregereinrichtung (202) ein in Reihe mit der Feder (110) verbundener elektromechanischer Vibrator ist.

9. Vorrichtung nach Anspruch 8, wobei die Erregereinrichtung einen piezoelektrischen oder magnetostriktiven Vibrator umfasst.

10. Vorrichtung nach Anspruch 8 oder 9, wobei der Vibrator eine bestehende Ventilkomponente ersetzt.

11. Ventil mit einer Feder zum Vorspannen einschließlich einer Ventilprüfvorrichtung nach einem der Ansprüche 8 bis 10.

12. Verfahren oder Vorrichtung nach einem der vorhergehenden Ansprüche, wobei das Ventil ein Überdruckventil ist.

## Revendications

1. Procédé de test d'une soupape ayant un ressort pour solliciter la soupape, le procédé comprenant:
une application d'une excitation d'oscillation au ressort ;
une détection d'une réponse à l'excication ; et
une détermination d'une caractéristique de la soupape sur la base de la réponse détectée.

2. Procédé selon la revendication 1, dans lequel l'excitation comprend une compression / détente longitudinale du ressort.

3. Procédé selon la revendication 1 ou la revendication 2, dans lequel l'excitation est appliquée par un vibrateur raccordé en série avec le ressort.

4. Procédé selon l'une quelconque des revendications précédentes, dans lequel la réponse détectée comprend une oscillation résonnante.

5. Procédé selon une revendication précédente, dans lequel la caractéristique de la soupape est la fréquence de résonance de l'ensemble de ressort.

6. Procédé selon l'une quelconque des revendications 1 à 3, dans lequel l'excitation est appliquée à la fréquence de résonance de l'ensemble de ressort.

7. Procédé selon l'une quelconque des revendications précédentes, dans lequel le test de la soupape est exécuté in situ.

8. Appareil de test d'une soupape ayant un ressort de sollicitation (110), l'appareil comprenant :
un excitateur (202) pour exciter le ressort ;
au moins un capteur (204, 206, 208) pour détecter une réponse à ladite excitation ; et
un dispositif de commande pour déterminer une caractéristique de la soupape sur la base de la réponse détectée par ledit au moins un capteur (204, 206, 208), **caractérisé en ce que** l'excitateur (202) est un vibrateur électromécanique raccordé en série avec le ressort (110).

9. Appareil selon la revendication 8, dans lequel l'excitateur comprend un vibrateur piézoéleccrique ou magnétostrictif.

10. Appareil selon la revendication 8 ou la revendication 9, dans lequel le vibrateur remplace un élément de soupape existant.

11. Soupape ayant un ressort de sollicitation et incluant un appareil de test de soupape selon l'une quelconque des revendications 8 à10.

12. Procédé ou appareil selon l'une quelconque des revendications précédentes, dans lequel la soupape est une soupape de surpression.
